# EUROPÄISCHE PATENTANMELDUNG

(11) **EP 4 245 664 A1**
(43) Veröffentlichungstag der Anmeldung: **20.09.2023**
(21) Anmeldenummer: 23160589.0
(22) Anmeldetag: 07.03.2023
(51) Int. Cl.: B64D 13/08, B64D 33/10, F02C 7/18

(54) **FLUGZEUGANTRIEB UND VERFAHREN ZUM BETREIBEN EINES FLUGZEUGANTRIEBS**

(30) Priorität: 16.03.2022 DE 102022106201
(71) Anmelder: MTU Aero Engines AG, 80995 München (DE)
(72) Erfinder: Hennig, Christian, 80995 München (DE); Gschwend, Felix, 80995 München (DE)

(57) **Zusammenfassung**

Die Erfindung betrifft einen Flugzeugantrieb (10), aufweisend ein Mantelstromtriebwerk (11) und eine Kabinenluftaufbereitungseinrichtung (12), wobei das Mantelstromtriebwerk (11) wenigstens einen Nebenstromkanal (15, 16) aufweist, der Kerntriebwerk (14) des Mantelstromtriebwerks (11) wenigstens teilweise umgibt und eingerichtet ist, Kühlluft (A, K) für die Kabinenluftaufbereitungseinrichtung (12) bereitzustellen.

## Beschreibung

Die Erfindung betrifft einen Flugzeugantrieb mit einem Mantelstromtriebwerk, wobei das Mantelstromtriebwerk eingerichtet ist, Kühlluft für eine Kabinenluftaufbereitungseinrichtung bereitzustellen. Zudem betrifft die Erfindung ein Verfahren zum Betreiben eines Flugzeugantriebs zum Bereitstellen von Kühlluft für eine Kabinenluftaufbereitungseinrichtung.

Verkehrsflugzeuge benötigen eine Klimaanlage, um Passagieren bei Flughöhen bis über 11.000 Metern eine notwendige Atmosphäre in der Kabine bieten zu können, insbesondere mit genügend Luftdruck, einer ausreichenden Sauerstoffversorgung und einer angemessenen Umgebungstemperatur. Hierfür werden im Rahmen eines Klimaanlagensystems im Flugzeug (Environmental Control System, ECS), ein Luftaustausch, eine Druck- sowie Temperaturregelung, insbesondere unter Einsatz einer Luftkreislaufmaschine (Air Cycle Machine, ACM), sichergestellt.

Mittels einer ACM wird typischerweise aus Triebwerken entnommene Luft, sogenannte Zapfluft, einem Wärmetauschprozess unterzogen. Die Zapfluft ist am Punkt ihrer Entnahme aus dem Triebwerk sehr heiß, weshalb sie unter Zuhilfenahme von Umgebungsstauluft (Ram Air) gekühlt wird. Diese Stauluftkühlung weist typischerweise einen separaten Lufteinlass im Flugzeugrumpf und Luftführungskanäle auf, die zur Masse und Komplexität des Flugzeugaufbaus beitragen. Zudem kann zusätzlicher Luftwiderstand durch den Lufteinlass für die Staudruckluft auftreten.

Hiervon ausgehend ist es eine Aufgabe der vorliegenden Erfindung, eine Kabinenluftversorgung zu verbessern, insbesondere einen verbesserten Flugzeugantrieb vorzuschlagen, mittels welchem insbesondere gekühlte Luft zur Verwendung im Flugzeug wie beispielsweise für eine Kabinenluftklimaanlage und/ oder zur Kühlung und/ oder zur Lüftung von Flugzeugkomponenten zur Verfügung gestellt werden kann. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Flugzeugantrieb vorgeschlagen, der ein Mantelstromtriebwerk und eine Kabinenluftaufbereitungseinrichtung aufweist. Das Mantelstromtriebwerk weist wenigstens einen Nebenstromkanal auf, der ein Kerntriebwerk des Mantelstromtriebwerks wenigstens teilweise umgibt und eingerichtet ist, Kühlluft für die Kabinenluftaufbereitungseinrichtung bereitzustellen.

Durch den vorgeschlagenen Flugzeugantrieb kann anstelle von oder zusätzlich zur Staudruckluft (Ram Air) eine Luftströmung wenigstens eines Nebenstromkanals zur Kühlung von in der Kabine bereitzustellenden Luft verwendet werden. Hierbei kann die Luftströmung des wenigstens einen Nebenstromkanals die Staudruckluftversorgung für die Kabinenluftaufbereitungseinrichtung und/ oder eine Air Cycle Machine (ACM) vollständig oder wenigstens teilweise ersetzen und eine notwendige Kühlung bzw. Kühlwirkung ermöglichen.

Gemäß einem weiteren Aspekt wird ein Mantelstromtriebwerk vorgeschlagen, welches zur Verwendung in einem hierin beschriebenen Flugzeugantrieb eingerichtet ist.

Der Flugzeugantrieb ist insbesondere zur Vortriebserzeugung für das Flugzeug ausgebildet und weist wenigstens ein Mantelstromtriebwerk, insbesondere des 3-Strom-Typs, auf. Das Mantelstromtriebwerk weist ein Kerntriebwerk und wenigstens einen das Kerntriebwerk wenigstens teilweise umgebenden Nebenstromkanal auf, insbesondere einen das Kerntriebwerk wenigstens teilweise umgebenden inneren Nebenstromkanal (erster Bypass) sowie einen den inneren Nebenstromkanal wenigstens teilweise umgebenden äußeren Nebenstromkanal (zweiter Bypass). Am Einlass des Mantelstromtriebwerks kann mittels wenigstens eines Fans Umgebungsluft eingesaugt werden, wobei eine Kernluftströmung das Kerntriebwerk durchströmen kann und wenigstens eine Nebenluftströmung in einem Nebenstromkanal am Kerntriebwerk vorbeigeleitet und aus dem Triebwerk in Strömungsrichtung ausgestoßen werden kann. Ein Nebenstromkanal kann dabei als radial weiter außen als der Kernstrom angeordnete Kreisringsektion Luft hinter einer beliebigen Niederdruckverdichterstufe entnehmen. Die Form bzw. Geometrie des Nebenstromkanals bzw. der Nebenstromkanäle kann dabei beliebig gestaltet sein. Bei einigen Ausführungsformen kann die Nebenluftströmung an wenigstens einer Stelle des Mantelstromtriebwerks wenigstens teilweise wieder mit der Kernströmung gemischt werden. Hierbei kann wenigstens ein Nebenstromkanal als eine eigenständige Komponente bzw. eigenes Modul ausgebildet sein, welches insbesondere fluidführend mit der Niederdruckturbine verbunden ist. Insbesondere kann bei einigen Ausführungsformen der Nebenstromkanal auch als Zapfluftleitung ausgebildet sein, die eingerichtet ist, kalte Zapfluft aus dem Niederdruckverdichter zu entnehmen.

Das Kerntriebwerk weist einen Verdichter, eine Brennkammer und eine Turbine auf. Ein Teil der vom Fan angesaugten Umgebungsluft kann als Arbeitsfluid im Verdichter komprimiert werden. In der in Strömungsrichtung des Kerntriebwerks nach dem Verdichter angeordneten Brennkammer kann die komprimierte Luft bzw. das komprimierte Arbeitsfluid mit einem Brennstoff vermischt und diese Mischung verbrannt werden, um Verbrennungsgase mit hohem Druck und hoher Temperatur zu erzeugen. Die Verbrennungsgase können von der Brennkammer zur Turbine strömen, wo sie sich ausdehnen können und dabei Arbeit verrichten. Zum Beispiel kann die Expansion der Verbrennungsgase in der Turbine bzw. einem Turbinenabschnitt eine Rotorwelle drehen, die beispielsweise mit einem Generator verbunden sein kann, um Elektrizität zu erzeugen. Im Anschluss an die Turbine können die Verbrennungsgase das Kerntriebwerk über einen Abgasabschnitt verlassen.

Die Erfindung beruht unter anderem auf der Idee, eine Luftströmung wenigstens eines Nebenstromkanals als Kühlluft, insbesondere durch Verwendung der Kühlluft als Kühlfluid in einer Wärmetauscheinrichtung, zur Abkühlung von einer zur Nutzung in einer Flugzeugkabine vorgesehenen Luft in der Kabinenluftaufbereitungseinrichtung zu verwenden. Da die Temperatur der Umgebungsluft in üblichen Flughöhen auf eine niedrige Temperatur (beispielsweise etwa -50 °C) sinken kann, kann mittels der Luftströmung wenigstens eines Nebenstromkanals bzw. Bypass, eine effiziente Kühlung ermöglicht werden. Eine Luftströmung wenigstens eines Nebenstromkanals kann eine Staudruckluft zur Versorgung der Kabinenluftaufbereitungseinrichtung zumindest teilweise ersetzen. Durch die Verwendung von wenigstens einem Nebenstromkanal oder insbesondere wenigstens zwei Nebenstromkanälen kann eine Versorgung von bekannten Kühleinrichtungen mit Gebläseluft (Fan Air) des Mantelstromtriebwerks zur Kühlung ermöglicht werden.

Zudem kann eine Integration einer Kabinenluftaufbereitung in dem Flugzeugantrieb bzw. dem Triebwerk ermöglicht werden. Eine solche Systemgrenze zwischen Triebwerk und Flugzeug ist nicht festgelegt, so dass in einigen Ausführungsformen Komponenten der Kabinenluftaufbereitungseinrichtung, wie beispielsweise Mischeinrichtungen und/ oder Komponenten einer Kabinenluftklimaanlage, dem Flugzeug zugeordnet sein können. In anderen Worten kann das Triebwerk bzw. der Flugzeugantrieb über eine eigene ACM bzw. eine eigene Kabinenluftaufbereitungseinrichtung zur Versorgung des Flugzeugs bzw. der Flugzeugkabine mit insbesondere vorgekühlter Luft aufweisen. Durch so ermöglichte, wenigstens teilweise Integration der Kabinenluftaufbereitungseinrichtung auf der Triebwerksseite kann beispielsweise Bauraum auf der Flugzeugseite eingespart werden und/ oder eine Staudruckluftversorgungseinrichtung kann entfallen. Somit kann ein Luftwiderstand des Flugzeugs im Flugbetrieb reduziert werden, was sich positiv auf eine Energie- und/ oder Umweltbilanz auswirken kann.

Bei einer Ausführungsform weist die Kabinenluftaufbereitungseinrichtung eine erste Wärmetauscheinrichtung auf, die eingerichtet ist, Zapfluft des Kerntriebwerks zu kühlen. Zur Versorgung einer Flugzeugkabine mit Luft, kann dem Kerntriebwerk Zapfluft, insbesondere in einem Bereich des Verdichters, entnommen werden. Um diese Zapfluft auf eine für die Nutzung in der Kabine geeignete Temperatur zu kühlen, kann die Zapfluft mittels der Kabinenluftaufbereitungseinrichtung bzw. deren erster Wärmetauscheinrichtung gekühlt bzw. vorgekühlt werden. Die Zapfluft kann hierbei an einem Hochdruckverdichter des Verdichters entnommen werden, wobei eine Entnahme von Zapfluft insbesondere nicht auf diese Position beschränkt ist, sondern beispielsweise auch mittels einer oder mehrerer Anzapfungen verschiedener Bereiche des Mantelstromtriebwerks, insbesondere einschließlich einem Fanbereich sowie wenigstens einem Bypass, erfolgen kann.

Bei einer Ausführungsform ist die erste Wärmetauscheinrichtung eingerichtet, Kühlluft des wenigstens einen Nebenstromkanals zur Kühlung der Zapfluft zu nutzen. Dabei ist eine Wärmetauscheinrichtung dazu eingerichtet, thermische Energie von einem ersten Stoffstrom, hier der Zapfluft, auf einen zweiten Stoffstrom, hier die Kühlluft, insbesondere des äußeren Nebenstromkanals, zu übertragen. Hierbei kann der ersten Wärmetauscheinrichtung beispielsweise Kühlluft aus dem wenigstens einen Nebenstromkanal zugeleitet werden, um diese als Kühlfluid zur Kühlung der Zapfluft zu nutzen.

Bei einer Ausführungsform weist die Kabinenluftaufbereitungseinrichtung eine zweite Wärmetauscheinrichtung auf, die eingerichtet ist, die mittels einer ACM bzw. einem Kühlaggregat der Kabinenluftaufbereitungseinrichtung verdichtete Zapfluft zu kühlen. Das Kühlaggregat weist dabei einen ACM-Verdichter, eine ACM-Turbine sowie wenigstens die zweite Wärmetauscheinrichtung auf und kann einen ACM-Generator aufweisen. Der ACM-Verdichter kann die dem Kühlaggregat zugeführte Zapfluft verdichten, womit eine Erwärmung der Zapfluft einhergeht. Diese verdichtete bzw. erwärmte Zapfluft kann die zweite Wärmetauscheinrichtung durchlaufen und mittels dieser gekühlt werden. Dieser gekühlte, verdichtete Zapfluftstrom kann danach die ACM-Turbine durchlaufen, sodass die Zapfluft expandieren und weiter abkühlen kann. Hierbei kann eine Rotationsenergie der ACM-Turbine genutzt werden, um den ACM-Generator beispielsweise über eine Welle anzutreiben und elektrische Energie zu liefern.

Die mittels dem Kühlaggregat bzw. ACM-Turbine gekühlte Zapfluft kann einer Kabinenluftklimaanlage, insbesondere zur weiteren Aufbereitung, zur Verfügung gestellt werden. Am Ausgang der ACM-Turbine bzw. vor der Kabinenluftklimaanlage kann die gekühlte Zapfluft mit Heißluft aus dem Zapfluft-System gemischt werden, um eine gewünschte Temperatur zu erhalten. Hierzu können insbesondere Ventil- und/ oder Zuleitungsvorrichtungen beispielsweise von einer Zuleitung zwischen der ersten Wärmetauscheinrichtung und dem Kühlaggregat oder einer Rückleitung zwischen der zweiten Wärmetauscheinrichtung zu der ACM-Turbine des Kühlaggregats zu einer Zuleitung von dem Kühlaggregat zu der Kabinenluftklimaanlage vorgesehen sein.

Bei einer Ausführungsform ist die zweite Wärmetauscheinrichtung eingerichtet, Kühlluft des wenigstens einen Nebenstromkanals zur Kühlung der mittels dem Kühlaggregat verdichteten Zapfluft zu nutzen. Hierbei kann der zweiten Wärmetauscheinrichtung Kühlluft aus wenigstens einem Nebenstromkanal zugeleitet werden, um diese als Kühlfluid zur Kühlung der mittels des ACM-Verdichters verdichteten Zapfluft zu nutzen. In einigen Ausführungsformen kann ein Wasserabscheidekreislauf/-system vorgesehen sein, um eine Feuchtigkeit der Zapfluft zu kontrollieren und eine Eisbildung insbesondere in der Turbine zu verhindern bzw. zu vermeiden. Bei einer Ausführungsform ist die erste Wärmetauscheinrichtung und/ oder die zweite Wärmetauscheinrichtung in wenigstens einem Nebenstromkanal angeordnet. Hierbei können die Wärmetauscheinrichtungen im gleichen oder in unterschiedlichen Nebenstromkanälen und beispielsweise parallel angeordnet sein bzw. den gleichen Eingangsbedingungen in wenigstens einem Nebenstromkanal ausgesetzt sein, oder seriell insbesondere im gleichen Nebenstromkanal angeordnet sein, wobei eine Wärmetauscheinrichtung Ausgangsbedingungen der anderen Wärmetauscheinrichtung ausgesetzt ist. In einer anderen Ausführungsform können die Wärmetauscheinrichtungen in verschiedenen Nebenstromkanälen angeordnet sein und jeweils die dortige Luftströmung zur Kühlung der Zapfluft nutzen.

Bei einer Ausführungsform kann das Mantelstromtriebwerk wenigstens zwei Nebenstromkanäle aufweisen, einen inneren Nebenstromkanal, welcher das Kerntriebwerk des Mantelstromtriebwerks wenigstens teilweise umgibt und wenigstens einen äußeren Nebenstromkanal, der den inneren Nebenstromkanal des Kerntriebwerks des Mantelstromtriebwerks wenigstens teilweise umgibt. Hierbei kann eine innere Nebenluftströmung und eine äußere Nebenluftströmung in dem jeweiligen inneren bzw. äußeren Nebenstromkanal strömen und zur Kühlung der Zapfluft verwendet bzw. genutzt werden. Insbesondere kann eine Luftströmung des inneren Nebenstromkanals genutzt werden, um die Zapfluft zusätzlich und vor dem Eintreten in die erste Wärmetauscheinrichtung vorzukühlen, wobei die Luftströmung des äußeren Nebenstromkanals zur Kühlung im Rahmen des hierin beschriebenen Kühlprozesses genutzt wird oder umgekehrt.

Gemäß einem weiteren Aspekt wird ein Verfahren zum Betreiben eines Flugzeugantriebs, aufweisend ein Mantelstromtriebwerk und eine Kabinenluftaufbereitungseinrichtung, insbesondere zum Bereitstellen von Kühlluft für die Kabinenluftaufbereitungseinrichtung vorgeschlagen, aufweisend Schritte a) des Durchströmens des Mantelstromtriebwerks, aufweisend ein Kerntriebwerk und wenigstens einen das Kerntriebwerk umgebenden Nebenstromkanal, mit Luft; b) des Entnehmens von Zapfluft aus dem Kerntriebwerk; und c) des Vorkühlens der Zapfluft mittels der Luftströmung des wenigstens einen Nebenstromkanals.

Insbesondere werden beim Durchströmen des Mantelstromtriebwerks die Komponenten des Kerntriebwerks und der wenigstens eine Nebenstromkanal mit angesaugter Luft durchströmt. Zum Vorkühlen der Zapfluft kann Wärme bzw. Energie der Zapfluft, insbesondere mittels einer Wärmetauscheinrichtung, an die Luftströmung des wenigstens einen Nebenstromkanals abgegeben werden, wobei die Luftströmung des wenigstens einen Nebenstromkanals als Kühlmedium in der Wärmetauscheinrichtung fungiert. Hierdurch kann ein Temperaturunterschied, welcher zwischen der bereits mittels des Kerntriebwerks erhitzten bzw. verdichteten Luft und der insbesondere im Wesentlichen Umgebungstemperatur aufweisenden Luftströmung des wenigstens einen Nebenstromkanals vorliegt, genutzt werden. Das Vorkühlen der Zapfluft kann damit bereits im Bereich des Mantelstromtriebwerks bzw. innerhalb des Flugzeugantriebs erfolgen, da die zum Kühlen verwendete Luft bereits in dem Triebwerk vorliegt und nicht separat bereitgestellt werden muss.

Bei einer Ausführungsform weist das Verfahren zusätzliche Schritte d) des Durchströmens eines Kühlaggregats der Kabinenluftaufbereitungseinrichtung mit der vorgekühlten Zapfluft; e) des Verdichtens der Zapfluft mittels eines (ACM-)Verdichters des Kühlaggregats; und f) des Kühlens der verdichteten Zapfluft mittels der Luftströmung des wenigstens einen Nebenstromkanals auf.

Hierzu kann die verdichtete Zapfluft einer zweiten Wärmetauscheinrichtung zugeführt werden, welche die Luftströmung des wenigstens einen Nebenstromkanals als Kühlmedium nutzt. Eine Arbeits- und/ oder Austrittstemperatur des ACM-Verdichters kann, insbesondere mittels des ACM-Verdichters selbst, einstellbar sein.

Bei einer Ausführungsform weist das Verfahren einen zusätzlichen Schritt g) des Rückführens der gekühlten Zapfluft zu einer (ACM-)Turbine des Kühlaggregats auf, um die Zapfluft weiter zu kühlen. Hier kann die Zapfluft expandieren und dadurch weiter abgekühlt werden. Hierbei können Expansions- und/ oder Austrittsbedingungen der ACM-Turbine, insbesondere mittels dieser, einstellbar sein.

Bei einer Ausführungsform weist das Verfahren einen zusätzlichen Schritt h) des Bereitstellens der gekühlten Zapfluft an einer Kabinenluftklimaanlage bzw. an einer Wärmetauscheinrichtung einer Kabinenluftklimaanlage auf. Die gekühlte Zapfluft kann vor dem Bereitstellen an der Kabinenluftklimaanlage beispielsweise einer weiteren Aufbereitung unterzogen werden und/ oder Zapfluft aus weiteren Bereichen dieses ACM-Zyklus können der gekühlten Zapfluft zugeführt werden, um durch Beimischen von beispielsweise höher temperierter oder druckbeaufschlagter Zapfluft, eine vorbestimmte Temperatur und/ oder einen vorbestimmten Druck für die Zapfluft, welche an der Kabinenluftklimaanlage bereitgestellt werden soll bzw. wird, zu erreichen.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung eines beispielhaften erfindungsgemäßen Flugzeugantriebs; und
- Fig. 2: ein Ablaufdiagramm eines beispielhaften erfindungsgemäßen Verfahrens zum Betreiben eines Flugzeugantriebs zum Bereitstellen von Kühlluft für eine Kabinenluftaufbereitungseinrichtung.

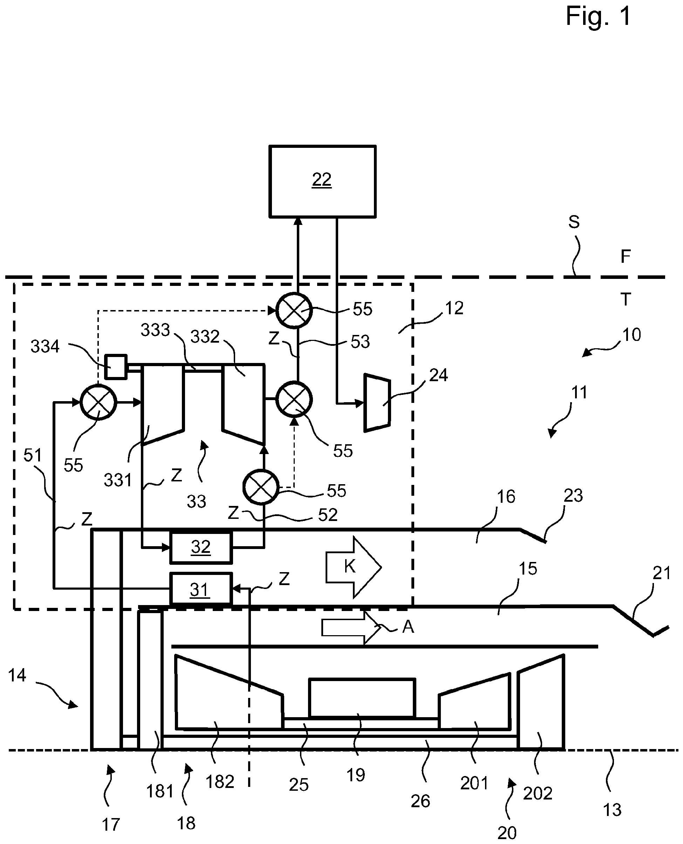

**Fig. 1** zeigt eine beispielhafte Darstellung eines Ausführungsbeispiels eines erfindungsgemäßen Flugzeugantriebs 10 aufweisend ein Mantelstromtriebwerk 11 in einer schematischen Ansicht. Die Darstellung der Fig 1 illustriert eine Systemgrenze S zwischen einer Flugzeugseite F und einer Triebwerksseite T. Diese ist nicht festgelegt und kann je nach Ausführungsbeispiel variieren.

Der Flugzeugantrieb 10 weist ein dreiströmig ausgebildetes Mantelstromtriebwerk 11 und eine Kabinenluftaufbereitungseinrichtung 12 auf. Das Mantelstromtriebwerk weist ausgehend von einer Triebwerksdrehachse 13 in radialer Richtung ein Kerntriebwerk 14, zwei Nebenstromkanäle 15, 16, einen das Kerntriebwerk 14 wenigstens teilweise umgebenden inneren Nebenstromkanal (erster Bypass) 15 und einen den inneren Nebenstromkanal 15 wenigstens teilweise umgebenden äußeren Nebenstromkanal (zweiter Bypass) 16 auf. Bei der beispielhaften Ausführungsform ist der äußere Nebenstromkanal 16 eingerichtet, Kühlluft als Kühlfluid für die Kabinenluftaufbereitungseinrichtung 12 bereitzustellen, wobei hierfür grundsätzlich auch eine Verwendung des inneren Nebenstromkanals 15 oder beider Nebenstromkanäle 15, 16 möglich ist.

Entlang der Triebwerksdrehachse 13 weist das Kerntriebwerk 14 in Strömungsrichtung hintereinander angeordnet einen Fan 17, einen Verdichter 18, eine Brennkammer 19 und eine Turbine 20 sowie einen Auslassabschnitt 21 auf. Der Auslassabschnitt 21 kann dabei einen Nachbrenner und/ oder eine beispielsweise konvergent-divergent, schubgesteuert oder konvergent ausgebildete Hauptaustrittsdüse aufweisen.

Das Mantelstromtriebwerk 11 ist eingerichtet, mittels des Fans 17 angesaugte Umgebungsluft zu beschleunigen. Dabei können drei Luftströme erzeugt werden: ein erster Luftstrom tritt als Arbeitsfluid in den Verdichter 18 ein, ein zweiter Luftstrom A kann durch den ersten, inneren Nebenstromkanal 15 und ein dritter äußerer Luftstrom K kann durch den zweiten, äußeren Nebenstromkanal 16 strömen und diesen über einen Bypassauslass 23 verlassen. Dieser Bypassauslass 23 kann beispielsweise als konvergente Düse ausgebildet oder in den Flugzeugantrieb 10 und/oder das Mantelstromtriebwerk 11 integriert ausgebildet sein.

Der Verdichter 18 weist dabei in Strömungsrichtung aufeinanderfolgend angeordnet, einen Niederdruckverdichter 181 und einen Hochdruckverdichter 182 auf. Die Turbine 20 weist in Strömungsrichtung aufeinanderfolgend angeordnet eine Hochdruckturbine 201 und eine Niederdruckturbine 202 auf. Der Niederdruckverdichter 181 verdichtet den in das Kerntriebwerk 14 eintretenden Arbeitsluftstrom, bevor er in den Hochdruckverdichter 182 gelangt, in welchem eine weitere Verdichtung des Arbeitsluftstroms erfolgt. Diese verdichtete Arbeitsluftströmung, die aus dem Hochdruckverdichter 182 austritt, kann in die Brennkammer 19 geführt werden, wo sie mit Brennstoff vermischt und zur Verbrennung gebracht wird. Die heißen Verbrennungsgase werden in der Hochdruckturbine 201 und in der Niederdruckturbine 202 entspannt, bevor sie durch den Abgasabschnitt 21 austreten können. Dabei können die Hochdruckturbine 201 und die Niederdruckturbine 202 über Wellenvorrichtungen 25, 26 jeweils den Hochdruckverdichter 182 bzw. den Niederdruckverdichter 181 antreiben. Bei anderen Ausführungsbeispielen können andere Wellensysteme ausgebildet sein und/ oder eine Trennung des Hochdrucksystems in ein Mitteldruck- und ein Hochdrucksystem mit separaten Wellen ausgebildet sein. Zudem kann das Kerntriebwerk 14 eine variabel ausgebildete Turbine 20, Verdichter 18, Mischer und der gleichen aufweisen, um einen thermodynamischen Prozess des Triebwerks 14 zu steuern.

In dem dargestellten Ausführungsbeispiel wird im Bereich des Hochdruckverdichters 182 Zapfluft Z entnommen, um diese Zapfluft Z nach Durchlaufen der Kabinenluftaufbereitungseinrichtung 12 einer Kabinenluftklimaanlage 22 zur Verfügung zu stellen und in eine Flugzeugkabine geleitet zu werden. In anderen Ausführungsformen kann die Entnahme von Zapfluft Z auch an anderen Stellen des Kerntriebwerks 14 und/ oder einem der beiden Bypässe 15, 16 erfolgen. Insbesondere kann ein Massenstrom und/ oder ein Druck der Zapfluft Z mittels geeigneter Stelleinrichtungen, insbesondere im Bereich von Anzapfstellen, einstellbar sein.

Die Kabinenluftaufbereitungseinrichtung 12 weist eine erste Wärmetauscheinrichtung 31 auf, die eingerichtet ist, die Zapfluft Z des Kerntriebwerks 14 zu kühlen bzw. Kühlluft K des äußeren Nebenstromkanals 16 zur Kühlung der Zapfluft Z zu nutzen. Hierzu ist die erste Wärmetauscheinrichtung 31 in dem äußeren Nebenstromkanal 16 angeordnet, wobei die Zapfluft Z die erste Wärmetauscheinrichtung 31 durchläuft und dabei Energie bzw. Wärme an die Kühlluft des äußeren Nebenstromkanals 16 abgeben kann. In anderen Ausführungsbeispielen kann die erste Wärmetauscheinrichtung 31 außerhalb des zweiten Bypass 16 angeordnet sein, wobei dieser Kühlluft K aus dem zweiten Bypass 16 zur Nutzung als Kühlmedium zugeführt wird.

Die so vorgekühlte Zapfluft Z kann zu einem Kühlaggregat 33 der Kabinenluftaufbereitungseinrichtung 12 geführt werden. Das Kühlaggregat 33 kann einen ACM-Verdichter 331, eine ACM-Turbine 332 sowie eine zweite Wärmetauscheinrichtung 32 aufweisen. Der ACM-Verdichter 331 kann die dem Kühlaggregat 33 zugeführte Zapfluft Z verdichten, womit eine Erwärmung der Zapfluft Z einhergeht. Diese verdichtete bzw. erwärmte Zapfluft Z kann die zweite Wärmetauscheinrichtung 32durchlaufen, wobei die zweite Wärmetauscheinrichtung 32 eingerichtet ist, Kühlluft K des äußeren Nebenstromkanals 16 zur Kühlung dieser verdichteten Zapfluft Z zu nutzen. Hierzu ist die zweite Wärmetauscheinrichtung 32 in dem äußeren Nebenstromkanal 16 angeordnet, wobei die verdichtete Zapfluft Z die zweite Wärmetauscheinrichtung 32 durchläuft und dabei Energie bzw. Wärme an die Kühlluft K des äußeren Nebenstromkanals 16 abgeben kann. In anderen Ausführungsbeispielen kann die zweite Wärmetauscheinrichtung 32 außerhalb des äußeren Nebenstromkanals 16 angeordnet sein, wobei dieser Kühlluft K aus dem äußeren Nebenstromkanal 16 zur Nutzung als Kühlmedium zugeführt wird. In einigen Ausführungsbeispielen kann der innere Nebenstromkanal 15 bzw. die zweite Luftströmung A des inneren Nebenstromkanals 15 als Kühlluft A ganz oder teilweise anstelle des äußeren Nebenstromkanals 16 bzw. der Kühlluft K des zweiten Bypass 16 genutzt werden.

Dieser gekühlte, verdichtete Zapfluftstrom kann danach die ACM-Turbine 332 durchlaufen, sodass die Zapfluft Z expandieren und weiter abkühlen kann. Dabei kann eine Rotationsenergie der ACM-Turbine 332 genutzt werden, um beispielsweise über eine ACM-Welle 333 einen ACM-Generator 334 anzutreiben und elektrische Energie zu liefern. Die ACM-Welle 333 treibt ferner den ACM-Verdichter 331 an. Insbesondere kann so erzeugte elektrische Energie auch zum Betreiben eines (hier nicht dargestellten) Elektromotors genutzt werden, welcher wiederum den ACM-Verdichter 331 antreiben kann.

Die mittels des Kühlaggregats 33 bzw. der ACM-Turbine 332 gekühlte Zapfluft Z kann über eine Zuleitung 53 an der Kabinenluftklimaanlage 22 bereit gestellt werden. Die Kabinenluftklimaanlage 22 kann eingerichtet sein, die Zapfluft Z aufzubereiten und verbrauchte Kabinenluft abzugeben, welche das Flugzeug über einen Kabinenluftauslass 24 verlassen kann. Vor der Kabinenluftklimaanlage 22 kann der gekühlten Zapfluft Z wärmere Zapfluft Z aus dem Zapfluft-System zugeführt werden, um eine gewünschte Temperatur zu erhalten. Hierzu können Ventileinrichtungen 55 und Zuleitungsvorrichtungen, beispielsweise von einer Zuleitung 51 zwischen der ersten Wärmetauscheinrichtung 31 und dem Kühlaggregat 33 oder einer Rückleitung 52 zwischen der zweiten Wärmetauscheinrichtung 32 zu der ACM-Turbine 332 des Kühlaggregats 33 zu der Zuleitung 53 von des Kühlaggregats 33 zu der Kabinenluftklimaanlage 22 vorgesehen sein.

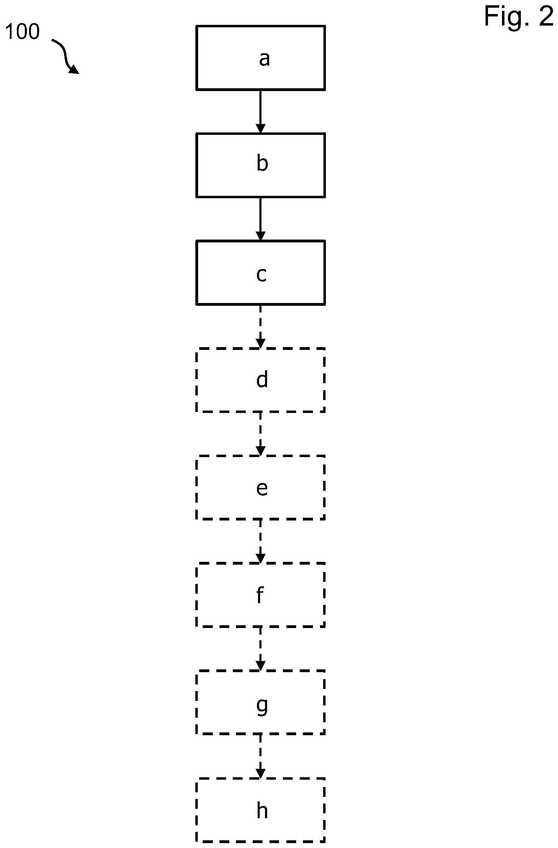

**Fig. 2** zeigt ein Ablaufdiagramm eines beispielhaften erfindungsgemäßen Verfahrens 100 zum Betreiben eines Flugzeugantriebs 10 zum Bereitstellen von Kühlluft für eine Kabinenluftaufbereitungseinrichtung 12.

In einem Schritt a) wird das Mantelstromtriebwerk 11 mit Luft durchströmt. Dabei ist das Mantelstromtriebwerk 11 insbesondere als 3-Strom-Triebwerk ausgebildet und weist wenigstens einen das Kerntriebwerk 14 umgebenden Nebenstromkanal 15, 16 auf. In einem Schritt b) wird Zapfluft Z aus dem Kerntriebwerk 14 entnommen und in einem Schritt c) mittels der Luftströmung A, K des wenigstens einen Nebenstromkanals 15, 16 vorgekühlt.

Ein Kühlaggregat 33 der Kabinenluftaufbereitungseinrichtung 12 kann in einem Schritt d) mit der vorgekühlten Zapfluft Z durchströmt werden und in einem Schritt e) kann diese vorgekühlte Zapfluft Z mittels eines (ACM-)Verdichters 331 des Kühlaggregats 33 verdichtet werden. In einem Schritt f) kann die verdichtete Zapfluft Z mittels der Luftströmung A, K des wenigstens einen Nebenstromkanals 15, 16 gekühlt werden, um in einem optionalen Schritt g) diese gekühlte Zapfluft Z zu einer (ACM-)Turbine 332 des Kühlaggregats 33 rückzuführen, um die Zapfluft Z dort weiter zu kühlen.

In einem weiteren optionalen Schritt h) kann die gekühlte Zapfluft Z an einer Kabinenluftklimaanlage 22 bereitgestellt werden. Hierdurch kann eine wenigstens teilweise Integration der Kabinenluftaufbereitungseinrichtung 12 auf der Triebwerksseite T ermöglicht werden, wodurch eine Staudruckluftversorgung zum Bereitstellen vorgekühlter Luft entfallen kann.

### BEZUGSZEICHENLISTE

- 10: Flugzeugantrieb
- 11: Mantelstromtriebwerk
- 12: Kabinenluftaufbereitungseinrichtung
- 13: Triebwerksdrehachse
- 14: Kerntriebwerk
- 15: innerer Nebenstromkanal (erster Bypass)
- 16: äußerer Nebenstromkanal (zweiter Bypass)
- 17: Fan
- 18: Verdichter
- 19: Brennkammer
- 20: Turbine
- 21: Abgasabschnitt
- 22: Kabinenluftklimaanlage
- 23: Bypassauslass
- 24: Kabinenluftauslass
- 25, 26: Wellenvorrichtungen
- 31: erste Wärmetauscheinrichtung
- 32: zweite Wärmetauscheinrichtung
- 33: Kühlaggregat
- 51, 52, 53: Leitungen
- 55: Ventileinrichtungen
- 181: Niederdruckverdichter
- 182: Hochdruckverdichter
- 201: Niederdruckturbine
- 202: Hochdruckturbine
- 331: ACM-Verdichter
- 332: ACM-Turbine
- 333: ACM-Welle
- 334: ACM-Generator
- F: Flugzeugseite
- A, K: Kühlluft
- S: Systemgrenze
- T: Triebwerksseite
- Z: Zapfluft

## Patentansprüche

1. Flugzeugantrieb (10), aufweisend ein Mantelstromtriebwerk (11) und eine Kabinenluftaufbereitungseinrichtung (12), wobei das Mantelstromtriebwerk (11) wenigstens einen Nebenstromkanal (15, 16) aufweist, der ein Kerntriebwerk (14) des Mantelstromtriebwerks (11) wenigstens teilweise umgibt und eingerichtet ist, Kühlluft (A, K) für die Kabinenluftaufbereitungseinrichtung (12) bereitzustellen.

2. Flugzeugantrieb (10) nach Anspruch 1, wobei die Kabinenluftaufbereitungseinrichtung (12) eine erste Wärmetauscheinrichtung (31) aufweist, die eingerichtet ist, Zapfluft (Z) des Kerntriebwerks (14) zu kühlen.

3. Flugzeugantrieb (10) nach Anspruch 2, wobei die erste Wärmetauscheinrichtung (31) eingerichtet ist, Kühlluft (A, K) des wenigstens einen Nebenstromkanals (15, 16) zur Kühlung der Zapfluft (Z) zu nutzen.

4. Flugzeugantrieb (10) nach wenigstens einem der vorhergehenden Ansprüche, wobei die Kabinenluftaufbereitungseinrichtung (12) eine zweite Wärmetauscheinrichtung (32) aufweist, die eingerichtet ist, die mittels eines Kühlaggregats (33) der Kabinenluftaufbereitungseinrichtung (12) verdichtete Zapfluft (Z) zu kühlen.

5. Flugzeugantrieb (10) nach Anspruch 4, wobei die zweite Wärmetauscheinrichtung (32) eingerichtet ist, Kühlluft (A, K) des wenigstens einen Nebenstromkanals (15, 16) zur Kühlung der mittels der Kühlturbine (33) verdichteten Zapfluft (Z) zu nutzen.

6. Flugzeugantrieb (10) nach wenigstens einem der Ansprüche 2 bis 5, wobei die erste Wärmetauscheinrichtung (31) und/ oder die zweite Wärmetauscheinrichtung (32) in dem wenigstens einen Nebenstromkanal (15, 16) angeordnet ist.

7. Flugzeugantrieb (10) nach wenigstens einem der vorhergehenden Ansprüche, wobei das Mantelstromtriebwerk (11) wenigstens zwei Nebenstromkanäle (15, 16) aufweist, einen inneren Nebenstromkanal (15), welcher das Kerntriebwerk (14) des Mantelstromtriebwerks (11) wenigstens teilweise umgibt und wenigstens einen äußeren Nebenstromkanal (16), der den inneren Nebenstromkanal (15) eines Kerntriebwerks (14) des Mantelstromtriebwerks (11) wenigstens teilweise umgibt.

8. Mantelstromtriebwerk (11) zur Verwendung in einem Flugzeugantrieb (10), ausgebildet nach wenigstens einem der vorhergehenden Ansprüche.

9. Verfahren (100) zum Betreiben eines Flugzeugantriebs (10), aufweisend ein Mantelstromtriebwerk (11) und eine Kabinenluftaufbereitungseinrichtung (12), aufweisend die folgenden Schritte:
a) Durchströmen des Mantelstromtriebwerks (11), aufweisend ein Kerntriebwerk (14) und wenigstens einen das Kerntriebwerk (14) umgebenden Nebenstromkanal (15, 16), mit Luft (A, K);
b) Entnehmen von Zapfluft (Z) aus dem Kerntriebwerk (14); und
c) Vorkühlen der Zapfluft (Z) mittels der Luftströmung (A, K) des wenigstens einen Nebenstromkanals (15, 16).

10. Verfahren (100) nach Anspruch 9, zusätzlich aufweisend die Schritte:
d) Durchströmen einer Kühlturbine (33) der Kabinenluftaufbereitungseinrichtung (12) mit der vorgekühlten Zapfluft (Z);
e) Verdichten der Zapfluft (Z) mittels eines Verdichters (331) der Kühlturbine (33); und
f) Kühlen der verdichteten Zapfluft (Z) mittels der Luftströmung (A, K) des wenigstens einen Nebenstromkanals (15, 16).

11. Verfahren (100) nach wenigstens einem der Ansprüche 9 oder 10, zusätzlich aufweisend den Schritt:
g) Rückführen der gekühlten Zapfluft (Z) zu einer Turbine (332) der Kühlturbine (33), um die Zapfluft (Z) weiter zu kühlen.

12. Verfahren (100) nach wenigstens einem der Ansprüche 9 bis 11, zusätzlich aufweisend den Schritt:
h) Bereitstellen der gekühlten Zapfluft (Z) an einer Kabinenluftklimaanlage (22).
